# FASCICULE DE BREVET EUROPEEN

(11) **EP 3 699 769 B1**
(45) Date de publication et mention de la délivrance du brevet: **20.10.2021**
(21) Numéro de dépôt: 20156554.6
(22) Date de dépôt: 11.02.2020
(51) Int. Cl.: G06F 13/16

(54) **PROCÉDÉ D'ARBITRAGE D'ACCÈS À UNE MÉMOIRE PARTAGÉE, ET DISPOSITIF ÉLECTRONIQUE CORRESPONDANT**
ARBITRIERUNGSVERFAHREN FÜR DEN ZUGANG ZU EINEM GEMEINSAM GENUTZTEN SPEICHER, UND ENTSPRECHENDE ELEKTRONISCHE VORRICHTUNG
METHOD FOR ARBITRATION OF ACCESS TO A SHARED MEMORY, AND CORRESPONDING ELECTRONIC DEVICE

(30) Priorité: 21.02.2019 FR 1901746
(43) Date de publication de la demande: 26.08.2020
(73) Titulaire: STMicroelectronics (Grenoble 2) SAS, 38000 Grenoble (FR)
(72) Inventeur: LABYRE, Jean-Louis, 38360 SASSENAGE (FR)
(74) Mandataire: Casalonga

(56) Documents cités:
- US-A1- 2006 155 893
- US-B1- 6 363 461
- PHILIPS SEMICONDUCTORS: "The I2C bus specification , version 2.1", INTERNET CITATION, 2000, pages 1-46, XP002678058, Extrait de l'Internet: URL:http://i2c2p.twibright.com:8080/spec/i 2c.pdf [extrait le 2012-06-19]
- "PCI Local Bus Specification - Revision 3.0 - Bus Operation", PCI LOCAL BUS SPECIFICATION,, no. revision 3.0, 3 février 2004 (2004-02-03), XP002497814,

## Description

Des modes de mise en oeuvre et de réalisation de l'invention concernent les dispositifs électroniques, plus particulièrement les dispositifs électroniques d'arbitrage d'accès à une mémoire partagée, communément connue de l'homme du métier sous le terme d'arbitrage de mémoire partagée (« shared memory arbitration » en langue anglaise).

En général, un dispositif électronique d'arbitrage d'accès à une mémoire partagée est configuré pour accorder l'accès à la mémoire, supposée libre, à une première interface qui en fait la demande en premier.

Autrement dit, lorsque l'accès à la mémoire n'est pas occupé, le dispositif électronique est configuré pour accepter une demande d'accès délivrée par une interface quelconque et reçue en premier par le dispositif électronique.

Une fois que l'accès à la mémoire est accordé, un tel dispositif électronique est configuré pour suspendre ou refuser des demandes d'accès ultérieures délivrées par une deuxième interface, jusqu'à la fin d'occupation de l'accès accordé à la première interface.

Lorsque l'accès à la mémoire est déjà accordé, une solution classique pour la deuxième interface est de répéter périodiquement sa demande d'accès, communément connue de l'homme du métier comme procédé d'attente active (« polling process » en anglais), jusqu'à ce que l'accès à la mémoire soit de nouveau disponible.

Cependant, lorsque la durée d'occupation de l'accès à la mémoire accordé à la première interface est longue, cette solution classique devient généralement très coûteuse au niveau du temps et de la consommation énergétique à cause des nombreuses répétitions de la demande d'accès émanant de la deuxième interface.

De surcroît, l'obtention de l'accès à la mémoire par la deuxième interface ne peut pas être garantie de façon systématique à la fin d'occupation de l'accès à la mémoire accordé à la première interface car le dispositif électronique peut probablement recevoir une autre demande d'accès de la première interface entre ladite fin d'occupation de l'accès accordé à la première interface et une prochaine répétition de la demande d'accès de la deuxième interface.

Si les demandes d'accès de la première interface sont fréquentes et imprévisibles, il est possible que la deuxième interface se bloque toujours dans le procédé d'attente active (« polling process » en anglais).

En d'autres termes, il est généralement requis une synchronisation fine et précise pour obtenir un accès à la mémoire après un ou des procédés d'attente active et il est impossible d'interrompre l'accès à la mémoire une fois accordé, ce qui est problématique voire dangereux pour la sécurité globale du dispositif électronique car l'accès à la mémoire peut être monopolisé en permanence, en toute mauvaise foi, par une seule interface dans des cas de piratages informatiques (« hacking » en langue anglaise).

Le document « PCI Local Bus spécification »-revision 3.0-bus operation XP002497814 décrit une latence d'arbitrage pour un maître sur le bus PCI. Cette latence d'arbitrage est représentée par un compteur dont la valeur est programmable. La durée réelle d'une transaction peut varier entre la valeur minimale du compteur augmentée d'un cycle d'horloge et la valeur maximale du compteur augmentée du nombre de cycle d'horloge requis pour terminer un transfert d'une ligne entière de cache.

Il existe ainsi un besoin de proposer une solution technique à faible complexité et à faible consommation d'énergie permettant d'éviter un blocage permanent d'accès à la mémoire et de gérer de façon plus efficace des alternances d'accès à la mémoire.

Selon un aspect, il est proposé un procédé d'arbitrage d'accès à une mémoire partagée entre au moins une première interface et une deuxième interface.

Ce procédé comprend
un déclenchement d'un comptage ayant une durée maximale de comptage, à la suite d'une demande d'accès à la mémoire émanant de la deuxième interface alors que l'accès actuel à la mémoire est accordé à la première interface, et
une autorisation d'accès à la mémoire pour la deuxième interface à la fin d'occupation de l'accès accordé à la première interface si la fin d'occupation se termine avant la fin de la durée maximale de comptage ou sinon à la fin de ladite durée maximale de comptage.

Avantageusement, un tel procédé permet d'assurer, lorsqu'une demande d'accès de la deuxième interface est reçue pendant que l'occupation de l'accès à la mémoire a déjà été accordé à la première interface, une alternance de l'accès à la mémoire à la fin d'une durée maximale de comptage ou à la fin d'occupation de l'accès actuel si cette fin d'occupation se termine plus tôt que la fin de ladite durée maximale de comptage.

De ce fait, l'accès à la mémoire ne peut pas être occupé de façon exclusive une fois l'accès accordé à une interface. Une alternance de l'accès à la mémoire est garantie, au plus tard, au bout de la durée maximale de comptage.

Il convient de noter qu'un tel procédé peut avantageusement être appliqué pour toutes les interfaces demandant l'accès à la mémoire ou sélectivement pour une ou plusieurs interfaces de façon à permettre à cette ou ces interfaces d'obtenir de façon prioritaire l'accès à la mémoire.

Par ailleurs, il convient de noter qu'un déclenchement du comptage à la suite d'une demande d'accès peut s'entendre comme signifiant un déclenchement du comptage dès la réception de la demande d'accès ou bien après un laps de temps après cette réception.

Selon un mode de mise en œuvre, la première interface est susceptible de procéder à une opération d'écriture dans ladite mémoire, cette opération d'écriture ayant une durée inférieure ou égale à une durée maximale d'écriture, et la durée maximale de comptage est choisie pour être supérieure à ladite durée maximale d'écriture.

Ainsi ceci permet de laisser se terminer toute écriture en cours dans la mémoire évitant ainsi avantageusement une éventuelle corruption des données écrites en mémoire.

Selon un mode de mise en œuvre, la deuxième interface comporte un signal de contrôle pouvant basculer entre deux états logiques.

On peut alors effectuer par exemple un premier basculement du signal de contrôle à la suite de ladite demande d'accès émanant de la deuxième interface, et le comptage est déclenché lors dudit premier basculement du signal de contrôle.

Ceci peut par exemple être mis en oeuvre dans le cadre d'un bus du type I²C.

A titre indicatif mais non limitatif, on peut par exemple effectuer un deuxième basculement du signal de contrôle à la fin d'occupation de l'accès accordé à la première interface si la fin d'occupation se termine avant la fin de la durée maximale de comptage ou sinon à la fin de ladite durée maximale de comptage, et on autorise l'accès à la mémoire pour la deuxième interface à la suite du deuxième basculement du signal de contrôle.

Là encore ceci peut être avantageusement mis en oeuvre dans le cadre d'un bus I²C.

Selon un mode de mise en œuvre, la première interface comprend une interface de communication radiofréquence du type de communication en champ proche ou de radio-identification, et la deuxième interface comprend un bus série synchrone bidirectionnel du type I²C ou SMBus.

Ainsi, un tel procédé permet avantageusement d'accorder à l'interface du type I²C ou SMBus l'accès à la mémoire, dans un pire cas, à la fin de la durée maximale de comptage.

A titre d'exemple non limitatif, dans le cas par exemple d'une interface du type I²C, le signal de contrôle de la deuxième interface est un signal de ligne série d'horloge, communément connu de l'homme du métier sous l'acronyme anglo-saxon SCL (« System CLock » en langue anglaise).

Ce signal de contrôle est avantageusement utilisé ici pour informer des moyens de contrôle, par exemple un microcontrôleur, couplé à l'interface du type I²C ou SMBus que l'accès à la mémoire est actuellement indisponible pour satisfaire sa demande d'accès à la mémoire via l'interface du type I²C ou SMBus.

Selon encore un autre mode de mise en œuvre, la durée maximale de comptage est choisie entre 25ms et 35ms si la deuxième interface comprend un bus série synchrone bidirectionnel du type SMBus, ce qui est compatible avec les normes SMBus.

Par exemple dans le cas d'une deuxième interface du type I²C, ou SMBus, la demande d'accès émanant de la deuxième interface peut par exemple comporter au moins un octet et le premier basculement a lieu à la suite du premier octet de la demande d'accès de la deuxième interface, et le signal de contrôle de la deuxième interface est dans un état bas à la suite du premier basculement et dans un état haut à la suite du deuxième basculement, ce qui peut être désigné sous le terme « étirement de SCL » (« SCL stretch » en langue anglaise).

L'état bas du signal de contrôle signifie que la deuxième interface n'est pas prête à traiter une demande d'accès à la mémoire tandis que l'état haut du signal de contrôle signifie que la deuxième interface est de nouveau prête à traiter une demande d'accès à la mémoire.

Selon un autre aspect, il est proposé un dispositif électronique comprenant au moins une première interface et une deuxième interface, une mémoire destinée à être partagée entre lesdites au moins première et deuxième interfaces, et des moyens d'arbitrage configurés pour
déclencher un comptage ayant une durée maximale de comptage, à la suite d'une demande d'accès à la mémoire émanant de la deuxième interface alors que l'accès actuel à la mémoire est accordé à la première interface, et
autoriser l'accès à la mémoire pour la deuxième interface à la fin d'occupation de l'accès accordé à la première interface si la fin d'occupation se termine avant la fin de la durée maximale de comptage ou sinon à la fin de ladite durée maximale de comptage.

A titre indicatif mais non limitatif, la première interface est susceptible de procéder à une opération d'écriture dans ladite mémoire, cette opération d'écriture ayant une durée inférieure ou égale à une durée maximale d'écriture, et la durée maximale de comptage est avantageusement choisie pour être supérieure à ladite durée maximale d'écriture.

Selon un mode de réalisation, la deuxième interface comporte un signal de contrôle pouvant basculer entre deux états logiques, et les moyens d'arbitrage sont configurés pour effectuer un premier basculement du signal de contrôle à la suite de ladite demande d'accès émanant de la deuxième interface, et déclencher le comptage lors dudit premier basculement du signal de contrôle.

Les moyens d'arbitrage peuvent par exemple être configurés pour
effectuer un deuxième basculement du signal de contrôle à la fin d'occupation de l'accès accordé à la première interface si la fin d'occupation se termine avant la fin de la durée maximale de comptage ou sinon à la fin de ladite durée maximale de comptage, et
autoriser l'accès à la mémoire pour la deuxième interface à la suite du deuxième basculement du signal de contrôle.

Selon un mode de réalisation, la première interface comprend une interface de communication radiofréquence du type de communication en champ proche ou de radio-identification, et la deuxième interface comprend un bus série synchrone bidirectionnel du type I²C ou SMBus.

Le signal de contrôle de la deuxième interface peut par exemple être un signal de ligne série d'horloge.

Selon encore un autre mode de réalisation, la durée maximale de comptage est choisie entre 25ms et 35ms si la deuxième interface comprend un bus série synchrone bidirectionnel du type SMBus.

La demande d'accès émanant de la deuxième interface peut par exemple comporter au moins un octet et les moyens d'arbitrage peuvent par exemple être configurés pour effectuer le premier basculement à la suite du premier octet de la demande d'accès de la deuxième interface, et tirer le signal de contrôle de la deuxième interface dans un état bas à la suite du premier basculement et dans un état haut à la suite du deuxième basculement.

Selon un autre aspect, il est proposé un appareil électronique comprenant un dispositif électronique tel que défini ci-avant et des moyens de contrôle couplés au dispositif électronique.

A titre indicatif mais non limitatif, les moyens de contrôle peuvent par exemple comporter un microcontrôleur.

Selon encore un autre aspect, il est proposé un système de communication comportant un appareil électronique tel que défini cidessus et des moyens de communication sans fil couplés au dispositif électronique.

Selon un mode de réalisation, les moyens de communication comportent un lecteur du type de communication en champ proche (« Near Field Communication » : NFC en langue anglaise) ou de radio-identification (« Radio Frequency Identification » : RFID en langue anglaise).

D'autres avantages et caractéristiques de l'invention apparaîtront à l'examen de la description détaillée de modes de mise en oeuvre et de réalisation, nullement limitatifs, et des dessins annexés sur lesquels :
[Fig 1] illustre schématiquement un mode de réalisation de l'invention,
[Fig 2] illustre schématiquement un exemple de mode de mise en oeuvre de l'invention,
[Fig 3] illustre en diagramme de temps un exemple de mode de mise en oeuvre de l'invention,
[Fig 4] illustre en diagramme de temps un autre exemple de mode de mise en œuvre de l'invention.

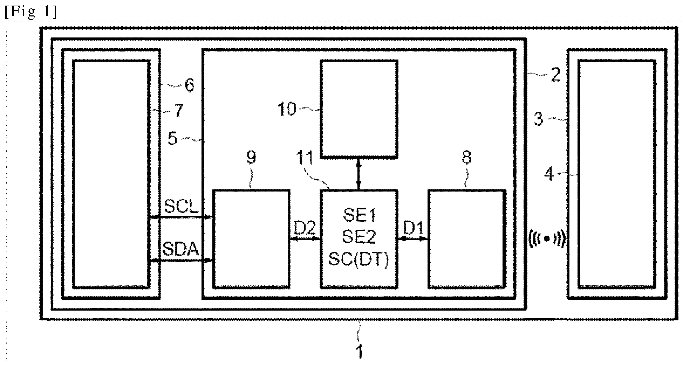

La figure 1 illustre un système de communication 1, ici par exemple un système de communication sans fil à courte portée basé sur la technologie de communication en champ proche (« Near Field Communication : NFC en langue anglaise) ou de radio-identification (« Radio Frequency Identification » : RFID en langue anglaise), susceptible d'être implémenté dans des applications industrielles ou domestiques telles que des contrôles d'accès chantier ou logement.

Le système de communication 1 comporte un appareil électronique de contrôle 2 et des moyens de communication 3.

Les moyens de communication 3 peuvent par exemple comporter plusieurs lecteurs de NFC ou de RFID connus de l'homme du métier. A des fins de simplification, on n'illustre qu'un lecteur de NFC/RFID 4 sur la figure 1.

L'appareil électronique de contrôle 2 comporte un dispositif électronique 5, ici par exemple une étiquette (« Tag » en langue anglaise) électronique compatible avec la technologie de NFC ou de RFID et des moyens de contrôle 6 comportant un microcontrôleur 7.

L'étiquette 5 comporte
au moins deux interfaces, ici par exemple une première interface 8 comportant une interface de communication radiofréquence configurée pour communiquer de façon sans fil avec le lecteur NFC/RFID 4 et une deuxième interface 9 de bus informatique,
une mémoire 10 destinée à être partagée entre lesdites au moins première et deuxième interfaces 8, 9, et
des moyens d'arbitrage 11 couplés respectivement à la mémoire 10 et auxdites au moins première et deuxième interfaces.

La deuxième interface 9 comprend un bus série synchrone bidirectionnel du type I²C (« Inter-Integrated Circuit » en langue anglaise) ou SMBus (« System Management Bus » en langue anglaise) connu de l'homme du métier.

La deuxième interface 9 est configurée pour communiquer avec le microcontrôleur 7 par l'intermédiaire d'un signal d'horloge SCL et d'un signal de données SDA défini dans les normes I²C et SMBus.

Le microcontrôleur 7 fonctionne en tant que maître sur le bus I²C (« I²C master » en langue anglaise) tandis que la deuxième interface 9 fonctionne en tant qu'esclave sur le bus I²C (« I²C slave » en langue anglaise).

Les moyens d'arbitrage 11 peuvent par exemple être implémentés sous forme d'une unité de contrôle numérique comportant des circuits logiques et sont configurés pour arbitrer l'accès à la mémoire 10 entre lesdites première et deuxième interfaces 8, 9.

Selon un exemple pratique, une demande d'accès émanant de la première interface 8 est imprévisible car cela dépend de la présence ou non du lecteur NFC/RFID 4.

Dans ce cas là, afin de privilégier des demandes d'accès de la deuxième interface et d'éviter un éventuel blocage d'accès à la mémoire 10 lié à un piratage informatique via la première interface 8, une demande d'accès de la deuxième interface 9 est traitée de manière que son accès à la mémoire soit garanti au plus tard au bout d'une durée choisie.

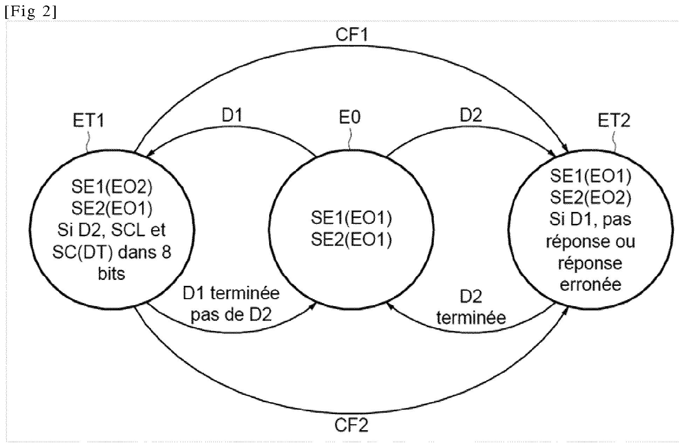

On se réfère maintenant à la figure 2 pour illustrer, sous forme de schémas de machine d'état (« state machine » en langue anglaise), un exemple de mise en oeuvre des moyens d'arbitrage 11.

Initialement, les moyens d'arbitrage sont dans un état de veille E0 (« standby state » en langue anglaise) et l'accès à la mémoire n'est pas accordé. Il y a un premier signal d'état SE1 représentatif de l'état d'occupation de la première interface 8 et un deuxième signal d'état SE2 représentatif de l'état d'occupation de la deuxième interface 9.

Les premier et deuxième signaux d'état SE1, SE2 sont tous dans un premier état d'occupation EO1, ce qui signifie que la mémoire 10 est actuellement accédée via aucune des première et deuxième interfaces 8, 9.

En outre, dans cet état de veille E0, les moyens d'arbitrage 11 sont configurés pour être prêts à autoriser une demande d'accès quelconque qui est reçue en premier par les moyens d'arbitrage 11.

Par exemple, si une première demande d'accès D1 émanant de la première interface 8 est reçue en premier, les moyens d'arbitrage 11 sont configurés pour basculer l'état de veille E0 en un premier état de traitement ET1.

De la même façon, si une deuxième demande d'accès D2 émanant de la deuxième interface 9 est reçue en premier, les moyens d'arbitrage 11 sont configurés pour basculer l'état de veille E0 dans un deuxième état de traitement ET2.

Une fois basculé dans le premier état de traitement ET1, le premier signal d'état SE1 est basculé dans un deuxième état d'occupation EO2, ce qui signifie que la mémoire 10 est actuellement accédée via la première interface 8.

Si les moyens d'arbitrage 11 ne reçoivent pas une demande d'accès de la deuxième interface 9 avant la fin d'occupation de l'accès accordé à la première interface 8, les moyens d'arbitrage 11 sont configurés pour basculer le premier état de traitement ET1 en l'état de veille E0.

Si une deuxième demande d'accès D2 émanant de la deuxième interface 9 est reçue par les moyens d'arbitrage 11 lors du premier état de traitement ET1, les moyens d'arbitrage 11 sont en outre configurés pour basculer un signal de contrôle, ici le signal d'horloge SCL défini dans les normes I2C ou SMBus.

Plus précisément, les moyens d'arbitrage 11 sont configurés pour basculer le signal d'horloge SCL dans un état bas à la suite du premier octet (« byte » en langue anglaise) de la deuxième demande D2.

Ce basculement du signal d'horloge SCL est désigné sous le terme « étirement SCL » (« SCL strech » en langue anglaise) et a pour objet d'informer au maître sur le bus I²C, autrement dit le microcontrôleur 7 que l'esclave sur le bus I²C, ici la deuxième interface 9 n'est actuellement pas disponible pour passer la deuxième demande d'accès D2.

De ce fait, la transmission de la deuxième demande d'accès D2 est suspendue par le microcontrôleur 7.

Un signal de comptage SC est activé pour une durée de temporisation DT (« Timeout » en langue anglaise), autrement dit une durée maximale de comptage, lors du basculement du signal d'horloge SCL.

Si la première interface 8 a fait une demande d'accès à la mémoire pour effectuer une écriture dans la mémoire, en fonction notamment des données à écrire, la durée d'écriture dans la mémoire peut être plus ou moins longue.

Il est toutefois possible de déterminer une durée maximale possible d'écriture. Ladite durée de temporisation DT est alors choisie de façon à être supérieure à ladite durée maximale d'écriture, par exemple de l'ordre de 20 ms. ce qui permet avantageusement d'éviter une éventuelle corruption des données écrites en mémoire.

Dans un cas où la deuxième interface 9 est un bus série synchrone bidirectionnel du type SMBus, cette durée de temporisation DT peut par exemple être choisie entre 25 ms et 35 ms conformément aux normes SMBus.

Il existe deux cas CF1, CF2 pour basculer le premier état de traitement ET1 dans le deuxième état de traitement ET2.

Dans un premier cas CF1, si la fin d'occupation de l'accès accordé à la première interface 8 se termine avant la fin de la durée de temporisation DT, les moyens d'arbitrage 11 sont configurés pour basculer le premier état de traitement ET1 en le deuxième état de traitement ET2 à la suite de la fin d'occupation de l'accès accordé à la première interface 8.

Dans un deuxième cas CF2, si ladite fin d'occupation se termine au moment ou après ladite durée de temporisation DT, les moyens d'arbitrage 11 sont configurés pour interrompre l'accès à la mémoire accordé à la première interface 8 et l'accorder à la deuxième interface 9.

En d'autres termes, ces deux cas CF1, CF2 sont mis en place pour privilégier la deuxième interface 9, ici l'interface du type I2C ou SMBus, de façon à assurer l'obtention de l'accès à la mémoire à la fin d'occupation de l'accès accordé à la première interface 8 ou, dans le pire cas, à l'issue de la durée de temporisation DT.

Par contre, pendant le deuxième état de traitement ET2, les moyens d'arbitrage 11 sont par exemple configurés pour ne pas répondre ou répondre avec une erreur à une éventuelle demande d'accès de la première interface 8.

A la fin d'occupation de l'accès accordé à la deuxième interface 9, les moyens d'arbitrage 11 sont configurés pour basculer le deuxième état de traitement ET2 en état de veille E0.

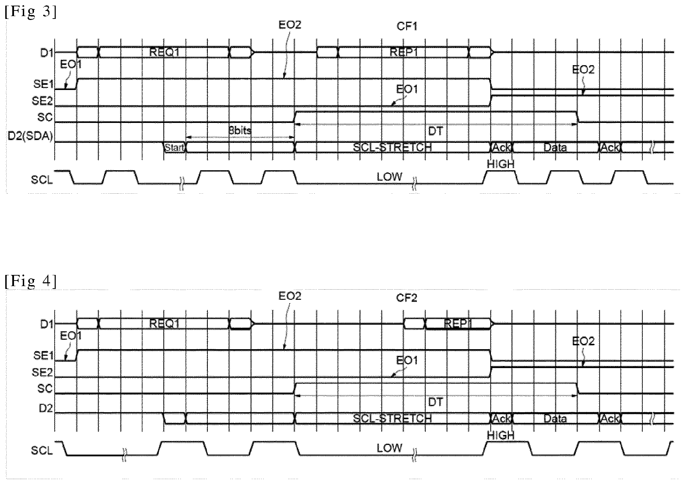

On se réfère maintenant à la figure 3 pour illustrer en diagramme de temps un exemple de mise en oeuvre du premier cas CF1.

Comme on peut l'observer sur la partie supérieure de la figure 3, la première demande d'accès D1 de la première interface 8 est reçue en premier et déclenche le deuxième état d'occupation EO2, se traduisant ici un état haut du premier signal d'état SE1 qui signifie que l'occupation de l'accès à la mémoire est accordée à la première interface 8.

Pendant la période d'occupation de l'accès accordé à la première interface 8, on peut observer que la première demande D1 a délivré une requête REQ1 et reçu une réponse REP1.

La deuxième demande d'accès D2 de la deuxième interface, ici le signal de données SDA, est illustrée en bas de la figure 3 et est reçue par les moyens d'arbitrage 11 pendant la première demande d'accès D1.

Le signal d'horloge SCL est basculé dans un état bas LOW à la suite du premier octet, (soit 8 premiers bits suivant un évènement de contrôle dit « départ » (« start » en langue anglaise) et incluant des bits de choix des dispositifs (« device select » en langue anglaise)), de la deuxième demande D2.

Comme expliqué ci-avant, il s'agit avantageusement d'un étirement du signal SCL (« SCL-STRETCH » en langue anglaise » selon les normes I²C ou SMBus pour informer le microcontrôleur 7 que la deuxième interface 9 n'est pas disponible pour recevoir des données de la deuxième demande D2.

En même temps, le signal de comptage SC est activé et basculé dans un état haut pendant la durée de temporisation DT.

Comme on peut le constater dans ce premier cas CF1, le premier signal d'état SE1, le deuxième signal d'état SE2 et le signal d'horloge SCL sont respectivement basculés dans le premier état d'occupation EO1, le deuxième état d'occupation EO2 et l'état haut HIGH à la fin d'occupation de l'accès accordé à la première interface 8.

Un bit de confirmation ACK (« acknowledgement » en langue anglaise) est généré une fois le signal d'horloge SCL entré dans l'état haut HIGH et des données DATA sont ensuite délivrées, à la suite du bit de confirmation ACK, par le microcontrôleur 7 dans le cas d'une écriture ou par l'étiquette 5 dans le cas d'une lecture.

De ce fait, la deuxième interface 9 a obtenu l'accès à la mémoire 10 à la fin d'occupation de l'accès accordé à la première interface 8 sans attente supplémentaire.

La figure 4 illustre en diagramme de temps un exemple de mise en oeuvre du deuxième cas CF2.

A la différent du premier cas CF1, la première demande D1 de la première interface 8 dans ce deuxième cas CF2 n'est pas encore terminée au moment de la fin de la de temporisation DT.

Dans cette circonstance, les moyens d'arbitrage 11 sont configurés pour basculer le signal d'horloge SCL dans l'état haut HIGH si le signal de comptage est de nouveau dans l'état bas.

Par conséquent, les premier et deuxième signaux d'état SE1, SE2 sont respectivement basculés dans le premier état d'occupation EO1 et le deuxième état d'occupation EO2.

La transaction de la première demande D1 de la première interface 8 est interrompue et l'accès à la mémoire 10 est désormais accordé à la deuxième interface 9.

Il convient de noter que le procédé d'arbitrage d'accès à la mémoire 5 illustré ci-avant peut par exemple être appliqué de façon réciproque sur n'importe quelle paire d'interfaces du dispositif électronique et que les désignations des première et deuxième interfaces peuvent être échangées.

Ainsi, on obtient un procédé et un dispositif électronique d'arbitrage d'accès à une mémoire partagée permettant d'accorder l'accès à la mémoire à une ou des interfaces prioritaires, dans le pire cas, au bout d'une durée maximale de comptage de façon à éviter des blocages d'accès à la mémoire et assurer la sécurité globale du dispositif électronique.

## Revendications

1. Procédé d'arbitrage d'accès à une mémoire (5) partagée entre au moins une première interface (8) et une deuxième interface (9), comprenant
un déclenchement d'un comptage ayant une durée maximale de comptage (DT), à la suite d'une demande d'accès (D2) à la mémoire émanant de la deuxième interface (9) alors que l'accès actuel à la mémoire (5) est accordé à la première interface (8), et
une autorisation d'accès à la mémoire (10) pour la deuxième interface (9) à la fin d'occupation de l'accès accordé à la première interface (8) si la fin d'occupation se termine avant la fin de la durée maximale de comptage (DT) ou sinon à la fin de ladite durée maximale de comptage (DT).

2. Procédé selon la revendication 1, dans lequel la première interface (8) est susceptible de procéder à une opération d'écriture dans ladite mémoire, cette opération d'écriture ayant une durée inférieure ou égale à une durée maximale d'écriture, et la durée maximale de comptage (DT) est choisie pour être supérieure à ladite durée maximale d'écriture.

3. Procédé selon la revendication 1 ou 2, dans lequel la deuxième interface (9) comporte un signal de contrôle (SCL) pouvant basculer entre deux états logiques, et dans lequel on effectue un premier basculement du signal de contrôle (SCL) à la suite de ladite demande d'accès (D2) émanant de la deuxième interface (9), et le comptage est déclenché lors dudit premier basculement du signal de contrôle (SCL).

4. Procédé selon la revendication 3, dans lequel on effectue un deuxième basculement du signal de contrôle (SCL) à la fin d'occupation de l'accès accordé à la première interface (8) si la fin d'occupation se termine avant la fin de la durée maximale de comptage (DT) ou sinon à la fin de ladite durée maximale de comptage (DT), et on autorise l'accès à la mémoire (10) pour la deuxième interface à la suite du deuxième basculement du signal de contrôle (SCL).

5. Procédé selon l'une quelconque des revendications précédentes, dans lequel la première interface (8) comprend une interface de communication radiofréquence du type de communication en champ proche ou de radio-identification, et la deuxième interface (9) comprend un bus série synchrone bidirectionnel du type I²C ou SMBus.

6. Procédé selon la revendication 5 prise en combinaison avec les revendications 3 et 4, dans lequel ledit signal de contrôle (SCL) de la deuxième interface (9) est un signal de ligne série d'horloge.

7. Procédé selon la revendication 6, dans lequel la durée maximale de comptage (DT) est choisie entre 25 ms et 35 ms si la deuxième interface (9) est un bus série synchrone bidirectionnel du type SMBus.

8. Procédé selon la revendication 7, dans lequel la demande d'accès émanant de la deuxième interface comporte au moins un octet et le premier basculement a lieu à la suite du premier octet de la demande d'accès (D2) de la deuxième interface (9), et le signal de contrôle (SCL) de la deuxième interface (9) est dans un état bas à la suite du premier basculement et dans un état haut à la suite du deuxième basculement.

9. Dispositif électronique comprenant au moins une première interface (8) et une deuxième interface (9), une mémoire (5) destinée à être partagée entre lesdites au moins première et deuxième interfaces (8, 9), et des moyens d'arbitrage (11) configurés pour
déclencher un comptage ayant une durée maximale de comptage (DT), à la suite d'une demande d'accès (D2) à la mémoire émanant de la deuxième interface (9) alors que l'accès actuel à la mémoire (5) est accordé à la première interface (8), et
autoriser l'accès à la mémoire (10) pour la deuxième interface (9) à la fin d'occupation de l'accès accordé à la première interface (8) si la fin d'occupation se termine avant la fin de la durée maximale de comptage (DT) ou sinon à la fin de ladite durée maximale de comptage (DT).

10. Dispositif selon la revendication 9, dans lequel la première interface (8) est susceptible de procéder à une opération d'écriture dans ladite mémoire, cette opération d'écriture ayant une durée inférieure ou égale à une durée maximale d'écriture, et la durée maximale de comptage (DT) est choisie pour être supérieure à ladite durée maximale d'écriture.

11. Dispositif selon la revendication 9 ou 10, dans lequel la deuxième interface (9) comporte un signal de contrôle (SCL) pouvant basculer entre deux états logiques, et dans lequel les moyens d'arbitrage (11) sont configurés pour effectuer un premier basculement du signal de contrôle (SCL) à la suite de ladite demande d'accès (D2) émanant de la deuxième interface (9), et déclencher le comptage lors dudit premier basculement du signal de contrôle (SCL).

12. Dispositif selon la revendication 11, dans lequel les moyens d'arbitrage (11) sont configurés pour
effectuer un deuxième basculement du signal de contrôle (SCL) à la fin d'occupation de l'accès accordé à la première interface (8) si la fin d'occupation se termine avant la fin de la durée maximale de comptage (DT) ou sinon à la fin de ladite durée maximale de comptage (DT), et autoriser l'accès à la mémoire (10) pour la deuxième interface à la suite du deuxième basculement du signal de contrôle (SCL).

13. Dispositif selon l'une quelconque des revendications 9 à 12, dans lequel la première interface (8) comprend une interface de communication radiofréquence du type de communication en champ proche ou de radio-identification, et la deuxième interface (9) comprend un bus série synchrone bidirectionnel du type I²C ou SMBus.

14. Dispositif selon la revendication 13 prise en combinaison avec les revendications 11 et 12, dans lequel ledit signal de contrôle (SCL) de la deuxième interface (9) est un signal de ligne série d'horloge.

15. Dispositif selon la revendication 14, dans lequel la durée maximale de comptage (DT) est choisie entre 25 ms et 35 ms si la deuxième interface (9) est un bus série synchrone bidirectionnel du type SMBus.

16. Dispositif selon la revendication 15, dans lequel la demande d'accès émanant de la deuxième interface comporte au moins un octet et les moyens d'arbitrage (11) sont configurés pour effectuer le premier basculement à la suite du premier octet de la demande d'accès (D2) de la deuxième interface (9), et tirer le signal de contrôle (SCL) de la deuxième interface (9) dans un état bas à la suite du premier basculement et dans un état haut à la suite du deuxième basculement.

17. Appareil électronique comprenant un dispositif électronique (5) selon l'une quelconque des revendications 9 à 16 et des moyens de contrôle (6) couplés au dispositif électronique (5).

18. Appareil électronique selon la revendication 17, les moyens de contrôle (6) comportent un microcontrôleur (7).

19. Système de communication comportant un appareil électronique (2) selon la revendication 17 ou 18 et des moyens de communication (3) sans fil couplés au dispositif électronique.

20. Système selon la revendication 19, dans lequel les moyens de communication (3) comportent un lecteur du type de communication en champ proche ou de radio-identification.

## Patentansprüche

1. Arbitrierungsverfahren für den Zugang zu einem Speicher (5), der von mindestens einer ersten Schnittstelle (8) und einer zweiten Schnittstelle (9) gemeinsam genutzt wird, mit
dem Auslösen einer Zählung mit einer maximalen Zähldauer (DT), die auf eine Speicherzugriffsanfrage (D2) von der zweiten Schnittstelle (9) folgt, während der aktuelle Zugriff auf den Speicher (5) der ersten Schnittstelle (8) gewährt wird, und
einer Speicherzugriffsberechtigung (10) für die zweite Schnittstelle (9) am Ende der Besetzung des der ersten Schnittstelle (8) gewährten Zugriffs, wenn das Ende der Besetzung vor dem Ende der maximalen Zähldauer (DT) oder andernfalls am Ende der maximalen Zähldauer (DT) erfolgt.

2. Verfahren nach Anspruch 1, bei dem die erste Schnittstelle (8) imstande ist, einen Schreibvorgang in dem Speicher durchzuführen, wobei dieser Schreibvorgang eine Dauer hat, die kleiner oder gleich einer maximalen Schreibdauer ist, und die maximale Zähldauer (DT) größer als die maximale Schreibdauer gewählt wird.

3. Verfahren nach Anspruch 1 oder 2, wobei die zweite Schnittstelle (9) ein Steuersignal (SCL) aufweist, das zwischen zwei logischen Zuständen umschalten kann, und wobei ein erstes Umschalten des Steuersignals (SCL) im Anschluss an die Zugriffsanfrage (D2) von der zweiten Schnittstelle (9) durchgeführt wird und die Zählung bei diesem ersten Umschalten des Steuersignals (SCL) ausgelöst wird.

4. Verfahren nach Anspruch 3, bei dem ein zweites Umschalten des Steuersignals (SCL) bei dem Ende der Besetzung des der ersten Schnittstelle (8) gewährten Zugriffs durchgeführt wird, wenn das Ende der Besetzung vor dem Ende der maximalen Zähldauer (DT) oder andernfalls am Ende der maximalen Zähldauer (DT) erfolgt, und der Zugriff auf den Speicher (10) für die zweite Schnittstelle nach dem zweiten Umschalten des Steuersignals (SCL) freigegeben wird.

5. Verfahren nach einem der vorhergehenden Ansprüche, wobei die erste Schnittstelle (8) eine Hochfrequenz-Kommunikationsschnittstelle vom Typ Nahfeldkommunikation oder Funkidentifikation aufweist, und die zweite Schnittstelle (9) einen bidirektionalen synchronen seriellen Bus vom Typ I²C oder SMBus aufweist.

6. Verfahren nach Anspruch 5 in Kombination mit den Ansprüchen 3 und 4, wobei das Steuersignal (SCL) der zweiten Schnittstelle (9) ein serielles Taktleitungssignal ist.

7. Verfahren nach Anspruch 6, wobei die maximale Zähldauer (DT) zwischen 25 ms und 35 ms festgelegt wird, wenn die zweite Schnittstelle (9) ein bidirektionaler synchroner serieller Bus vom Typ SMBus ist.

8. Verfahren nach Anspruch 7, wobei die Zugriffsanfrage von der zweiten Schnittstelle mindestens ein Byte umfasst und das erste Umschalten nach dem ersten Byte der Zugriffsanfrage (D2) von der zweiten Schnittstelle (9) erfolgt und das Steuersignal (SCL) der zweiten Schnittstelle (9) nach dem ersten Umschalten in einem niedrigen Zustand und nach dem zweiten Umschalten in einem hohen Zustand ist.

9. Elektronische Vorrichtung, die mindestens eine erste Schnittstelle (8) und eine zweite Schnittstelle (9), einen Speicher (5), der von der mindestens ersten und zweiten Schnittstelle (8, 9) gemeinsam genutzt wird, und eine Arbitrierungseinrichtung (11) umfasst, die konfiguriert ist, um
eine Zählung mit einer maximalen Zähldauer (DT) auszulösen, die auf eine Speicherzugriffsanfrage (D2) von der zweiten Schnittstelle (9) folgt, während der aktuelle Zugriff auf den Speicher (5) der ersten Schnittstelle (8) gewährt wird, und
den Zugriff auf den Speicher (10) für die zweite Schnittstelle (9) am Ende der Besetzung des der ersten Schnittstelle (8) gewährten Zugriffs zu autorisieren, wenn das Ende der Besetzung vor dem Ende der maximalen Zählzeit (DT) oder andernfalls am Ende der maximalen Zählzeit (DT) erfolgt.

10. Vorrichtung nach Anspruch 9, bei der die erste Schnittstelle (8) imstande ist, einen Schreibvorgang in dem genannten Speicher auszuführen, wobei dieser Schreibvorgang eine Dauer hat, die kleiner oder gleich einer maximalen Schreibdauer ist, und die maximale Zähldauer (DT) größer als die maximale Schreibdauer gewählt wird.

11. Vorrichtung nach Anspruch 9 oder 10, wobei die zweite Schnittstelle (9) ein Steuersignal (SCL) umfasst, das zwischen zwei logischen Zuständen umschaltbar ist, und wobei die Arbitrierungseinrichtung (11) so konfiguriert ist, dass sie ein erstes Umschalten des Steuersignals (SCL) im Anschluss an die Zugriffsanfrage (D2) von der zweiten Schnittstelle (9) durchführt und den Zählvorgang nach dem ersten Umschalten des Steuersignals (SCL) auslöst.

12. Vorrichtung nach Anspruch 11, wobei die Arbitrierungseinrichtung (11) konfiguriert ist, um ein zweites Umschalten des Steuersignals (SCL) am Ende der Besetzung des der ersten Schnittstelle (8) gewährten Zugriffs auszuführen, wenn das Ende der Besetzung vor dem Ende der maximalen Zähldauer (DT) oder andernfalls am Ende der maximalen Zähldauer (DT) liegt, und den Zugriff auf den Speicher (10) für die zweite Schnittstelle (8) nach dem zweiten Umschalten des Steuersignals (SCL) zu gewähren.

13. Vorrichtung nach einem der Ansprüche 9 bis 12, wobei die erste Schnittstelle (8) eine Hochfrequenz-Kommunikationsschnittstelle vom Typ Nahfeldkommunikation oder Funkidentifikation aufweist, und die zweite Schnittstelle (9) einen bidirektionalen synchronen seriellen Bus vom Typ I²C oder SMBus aufweist.

14. Vorrichtung nach Anspruch 13 in Kombination mit den Ansprüchen 11 und 12, wobei das Steuersignal (SCL) der zweiten Schnittstelle (9) ein serielles Taktleitungssignal ist.

15. Vorrichtung nach Anspruch 14, wobei die maximale Zähldauer (DT) zwischen 25 ms und 35 ms festgelegt wird, wenn die zweite Schnittstelle (9) ein bidirektionaler synchroner serieller Bus vom Typ SMBus ist.

16. Vorrichtung nach Anspruch 15, wobei die Zugriffsanfrage von der zweiten Schnittstelle mindestens ein Byte umfasst und die Arbitrierungseinrichtung (11) so konfiguriert sind, dass sie das erste Umschalten nach dem ersten Byte der Zugriffsanfrage (D2) von der zweiten Schnittstelle (9) durchführen und das Steuersignal (SCL) von der zweiten Schnittstelle (9) nach dem ersten Umschalten in einen niedrigen Zustand und nach dem zweiten Umschalten in einen hohen Zustand führen.

17. Elektronisches Gerät mit einer elektronischen Vorrichtung (5) nach einem der Ansprüche 9 bis 16 und einer mit der elektronischen Vorrichtung (5) gekoppelten Steuereinrichtung (6).

18. Elektronisches Gerät nach Anspruch 17, wobei die Steuereinrichtung (6) einen Mikrocontroller (7) aufweist.

19. Kommunikationssystem mit einem elektronischen Gerät (2) nach Anspruch 17 oder 18 und einer mit dem elektronischen Gerät gekoppelten drahtlosen Kommunikationseinrichtung (3).

20. System nach Anspruch 19, wobei die Kommunikationseinrichtung (3) ein Lesegerät vom Typ Nahfeldkommunikation oder Funkidentifikation aufweist.

## Claims

1. Method for arbitrating access to a memory (5) shared between at least a first interface (8) and a second interface (9), comprising
triggering a count having a maximum count time (DT), in response to a memory access request (D2) from the second interface (9) while current access to the memory (5) is granted to the first interface (8), and
authorising access to the memory (10) for the second interface (9) at the end of occupancy of the access granted to the first interface (8) if the end of occupancy occurs before the end of the maximum count time (DT) or otherwise at the end of said maximum count time (DT).

2. Method according to claim 1, wherein the first interface (8) is capable of carrying out a write operation to said memory, this write operation having a time that is shorter than or equal to a maximum write time, and the maximum count time (DT) is selected such that it is longer than said maximum write time.

3. Method according to claim 1 or 2, wherein the second interface (9) includes a control signal (SCL) which can switch between two logic states, and wherein a first switching of the control signal (SCL) is carried out in response to said access request (D2) from the second interface (9), and counting is triggered during said first switching of the control signal (SCL).

4. Method according to claim 3, wherein a second switching of the control signal (SCL) is carried out at the end of occupancy of the access granted to the first interface (8) if the end of occupancy occurs before the end of the maximum count time (DT) or otherwise at the end of said maximum count time (DT), and access to the memory (10) is authorised for the second interface in response to the second switching of the control signal (SCL).

5. Method according to any one of the preceding claims, wherein the first interface (8) comprises a radio frequency communication interface of the near-field communication or radio frequency identification type, and the second interface (9) comprises a bidirectional synchronous serial bus of the I²C or SMBus type.

6. Method according to claim 5 taken in combination with claims 3 and 4, wherein said control signal (SCL) of the second interface (9) is a serial clock line signal.

7. Method according to claim 6, wherein the maximum count time (DT) is chosen between 25 ms and 35 ms if the second interface (9) is a bidirectional synchronous serial bus of the SMBus type.

8. Method according to claim 7, wherein the access request from the second interface includes at least one byte and the first switching occurs in response to the first byte of the access request (D2) from the second interface (9), and the control signal (SCL) of the second interface (9) is in a low state after the first switching and in a high state after the second switching.

9. Electronic device comprising at least a first interface (8) and a second interface (9), a memory (5) intended to be shared between said at least first and second interfaces (8, 9), and arbitration means (11) configured to
trigger a count with a maximum count time (DT), in response to a memory access request (D2) from the second interface (9) while current access to the memory (5) is granted to the first interface (8), and
authorise access to the memory (10) for the second interface (9) at the end of occupancy of the access granted to the first interface (8) if the end of occupancy occurs before the end of the maximum count time (DT) or otherwise at the end of said maximum count time (DT).

10. Device according to claim 9, wherein the first interface (8) is capable of carrying out a write operation to said memory, this write operation having a time that is shorter than or equal to a maximum write time, and the maximum count time (DT) is selected such that it is longer than said maximum write time.

11. Device according to claim 9 or 10, wherein the second interface (9) includes a control signal (SCL) which can switch between two logic states, and wherein the arbitration means (11) are configured to carry out a first switching of the control signal (SCL) in response to said access request (D2) from the second interface (9), and to trigger the counting during said first switching of the control signal (SCL).

12. Device according to claim 11, wherein the arbitration means (11) are configured to carry out a second switching of the control signal (SCL) at the end of occupancy of the access granted to the first interface (8) if the end of occupancy occurs before the end of the maximum count time (DT) or otherwise at the end of said maximum count time (DT), and to authorise access to the memory (10) for the second interface in response to the second switching of the control signal (SCL).

13. Device according to any one of claims 9 to 12, wherein the first interface (8) comprises a radio frequency communication interface of the near-field communication or radio frequency identification type, and the second interface (9) comprises a bidirectional synchronous serial bus of the I²C or SMBus type.

14. Device according to claim 13 taken in combination with claims 11 and 12, wherein said control signal (SCL) of the second interface (9) is a serial clock line signal.

15. Device according to claim 14, wherein the maximum count time (DT) is chosen between 25 ms and 35 ms if the second interface (9) is a bidirectional synchronous serial bus of the SMBus type.

16. Device according to claim 15, wherein the access request from the second interface includes at least one byte and the arbitration means (11) are configured to carry out the first switching in response to the first byte of the access request (D2) from the second interface (9), and to force the control signal (SCL) of the second interface (9) into a low state after the first switching and into a high state after the second switching.

17. Electronic apparatus comprising an electronic device (5) according to any one of claims 9 to 16 and control means (6) coupled to the electronic device (5).

18. Electronic apparatus according to claim 17, wherein the control means (6) include a microcontroller (7).

19. Communication system including an electronic apparatus (2) according to claim 17 or 18 and wireless communication means (3) coupled to the electronic device.

20. System according to claim 19, wherein the communication means (3) comprise a reader of the near-field communication or radio frequency identification type.
